# EUROPEAN PATENT SPECIFICATION

(11) **EP 1 751 935 B1**
(45) Date of publication and mention of the grant of the patent: **07.01.2009**
(21) Application number: 05783095.2
(22) Date of filing: 19.05.2005
(51) Int. Cl.: H04L 12/56

(54) **OPEN SERVICE DISCOVERY AND ROUTING MECHANISM FOR CONFIGURING CROSS-DOMAIN TELECOMMUNICATION SERVICES**
OFFENER MECHANISMUS FÜR DAS AUFFINDEN VON DIENSTEN UND DAS ROUTING ZUM KONFIGURIEREN VON CROSS-DOMAIN-TELEKOMMUNIKATIONSDIENSTEN
MECANISME DE RECHERCHE ET D'ACHEMINEMENT DE SERVICES OUVERTS SERVANT A EFFECTUER LA CONFIGURATION DE SERVICES DE TELECOMMUNICATION INTERDOMAINES

(30) Priority: 20.05.2004 CA 2467945; 30.07.2004 US 903436
(43) Date of publication of application: 14.02.2007
(73) Proprietor: Alcatel Lucent, 75008 Paris (FR)
(72) Inventor: CUERVO, Fernando, Ottawa, Ontario K0A 1T0 (CA); GUINGO, Pierrick, Jacques, Ottawa, Ontario K2H 9K4 (CA); JANSEN, Arnoldus, Joannes, Jacobus, Manotick, Ontario K4M 1J8 (CA); SIM, Michel, Ottawa, Ontario K2B 5M6 (CA)
(74) Representative: Korakis-Ménager, Sophie
(86) International application number: PCT/EP2005/010041
(87) International publication number: WO 2006/000467

(56) References cited:
- EP-A- 1 185 029
- US-A1- 2002 145 981
- US-A1- 2003 016 678
- MOY PROTEON J ET AL: "OSPF Version 2" NETWORK WORKING GROUP REQUEST FOR COMMENTS 1583, March 1994 (1994-03), XP015007370
- REKHTER Y ET AL: "A Border Gateway Protocol 4 (BGP-4)" IETF NETWORK WORKING GROUP, RFC 1771, March 1995 (1995-03), XP002226832

## Description

### Cross-reference to other applications

This application claims priority from Canadian Patent Application 2,467,945, entitled "Open Service Discovery and Routing Mechanism for Configuring Cross-Domain Telecommunication Services" and filed on May 20, 2004.

### Field of the invention

The invention relates to routing within telecommunication networks, and more particularly to exchange of reachability information in multi-domain networks.

### Background of the invention

Configuration and operation of cross-domain services is a major issue for network and network-service providers. As service providers establish peering and wholesale relationships with multiple service provider partners, they find themselves in a complex situation in which services must be deployed across a constellation of different and non-integrated vendor, service, and technology-specific management systems. The problem of cross-domain service management, whether it means coordinating management operations across internal administrations, technologies, vendors, or with management systems of external providers is mainly caused by the ineffectual methods for exchanging network-service information between disparate domain management systems.

At the same time, the mix of technologies in telecommunications networks offers multiple implementation options for connecting end-users to the network and providing transport of service traffic. It becomes almost impossible for end-users and service providers to make effective implementation choices. For example, based on congestion, availability, or cost, an enterprise may decide to send data via a secure private tunnel over the Internet, or choose a managed IP VPN service from one or more Network Service Providers offering the same service with guaranteed Service Level Agreements (for example, Quality of Service, availability) and differentiated pricing. Similarly, a Network Access Provider might choose to establish multiple peering arrangements with Internet Service Providers to offer Internet Access Services to its access customers. In this environment, one needs to have adequate information to make an informed decision. However, a predetermined way to implement a service across the various network and network management domain administrations is not viable.

Currently, methods for integrating management systems are either based on deploying manual and static workflow procedures or building a costly, highly integrated and service-specific umbrella management system. The manual solution requires that the workflow procedures be coordinated across various vendor-specific domain managers using various Graphical User Interfaces. Service operators must manually exchange peering information and interconnection agreements about their respective networks as each domain manager is restricted to viewing and managing only the resources under its direct supervision. The integrated solution requires that the umbrella management system interfaces with all the involved domain management systems. However, integration of domain managers into an OSS system can lead to scalability problems, since a very large set of detailed management information from all domain managers must be maintained within a single system, while resources are micro-managed at the lowest level. An integrated solution may also be relatively inflexible, having limited adaptability to changes. An integrated solution also requires each service provider to give up some control over resources in its domain, which service providers may be reluctant to do as it would require exposing information to other domains.

Within the network layer, network elements have for many years adopted a distributed and collaborative inter-working approach based on the capability of exchanging reachability information on a peer-to-peer basis using dedicated advertisement mechanisms for specific services. The best example of such mechanisms is the Border Gateway Protocol 4 (BGPv4) that has proven to be very useful in large scale networks, namely the Internet. Nevertheless, some scalability and security problems have been identified with respect to BGPv4. Furthermore BGPv4, as a means to exchange reachability information, is technology specific in that it refers to addresses that are specific to a transport or networking technology. As a result, no end-to-end mechanism exists to support service routing convergence across those different networks.

A distributed mechanism for exchanging service reachability information across domains of different technologies or administrations would permit routing of cross-domain services, without requiring a costly and inflexible umbrella management system.
According to US2003/0016678, routes between und-nodes can be established across multiple domains.

### Summary of the invention

In accordance with one aspect of the invention, a method is provided for distributing service domain reachability information across domain boundaries in a communication network, the domains differing in at least one of administrator, technology, and vendor. An advertisement identifying a service supported within a domain is transmitted to at least one peer domain. Receipt of advertisements from peer domains is monitored. Upon receipt of an advertisement from a peer domain the advertisement is propagated to other peer domains and the routing information table is updated by adding an identification of the service, an identification of an originating domain of the advertisement, and an identification of the peer domain. At least one metric associated with the service, the originating domain, and the peer domain may be computed and added to the routing information table.

The methods may be stored as instructions on a computer-readable medium, to be executed by a computer processor. Apparatus is also provided for implementing the methods of the invention, such as a network element.

The method and apparatus of the present invention allow reachability information to be exchanged across domains. The mechanism of the invention can support any types of services, is designed to handle multi-domain networks including networks consisting of multiple service providers, and is technology-agnostic, allowing services to be implemented in diverse networks providing diverse network technologies. In contrast to BGPv4, which focuses on host reachability (or Service Access Point reachability in the language used herein), the invention focuses on domain reachability. The objective is for a user or software to be able to ascertain that a domain can reach another domain using a particular network service. Together with the distribution of the load of advertising, learning and updating system information across domain managers in a peer-to-peer manner, scalability problems are significantly reduced or eliminated since the system scales in relationship to the number of domains and not to the number of reachable destinations. Bottlenecks and single points of failure are avoided by using the peer-to-peer model. New services can be defined and advertised to peer domains, and new metrics can be defined and used in computing routes. New services can also be dynamically introduced without disruption to existing services. Control over each domain is maintained by each domain manager and information exchange between peer domains is minimal, thus alleviating issues of trust and privacy restrictions among different administrations.

### Brief description of the drawings

The features and advantages of the invention will become more apparent from the following detailed description of the preferred embodiment(s) with reference to the attached figures, wherein:
FIG. 1 is a diagram of an example domain in which the invention is implemented according to one embodiment of the invention;
FIG. 2 is a diagram of an example multi-domain network according to one embodiment of the invention;
FIG. 3 is a diagram of an example service implemented across the multi-domain network of Fig. 2; and
FIG. 4 is an example table of reachability information maintained by Domain C of Fig. 3.

It will be noted that in the attached figures, like features bear similar labels.

### Detailed description of the embodiments

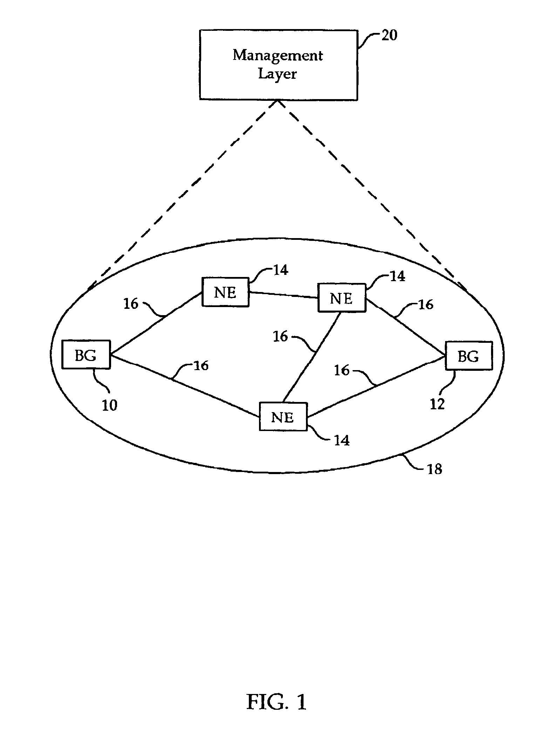

Referring to FIG. 1, an example of a telecommunication domain is shown. The domain includes a first border gateway 10, a second border gateway 12, and a plurality of interior network elements 14. Collectively, the first border gateway 10, the second border gateway 12, and the plurality of interior network elements 14 are referred to as network elements 18 of the domain. The network elements of the domain are variously interconnected by communication links 16. The domain shown in FIG. 1 is for example purposes only. More generally, the domain includes a plurality of network elements, at least two of which are border gateways. The border gateways provide communication access to devices outside the domain, such as border gateways of other domains or end user devices.

The domain also includes a management layer 20. The management layer 20 comprises a plurality of components, including a Service Domain Manager (SDM). The SDM is preferably in the form of software instructions located on one or more of the network elements of the domain, in particular on the border gateways as it is the border gateways which communicate directly with other domains according to the invention. Alternatively, the SDM may be located on separate workstations communicating with the network elements.

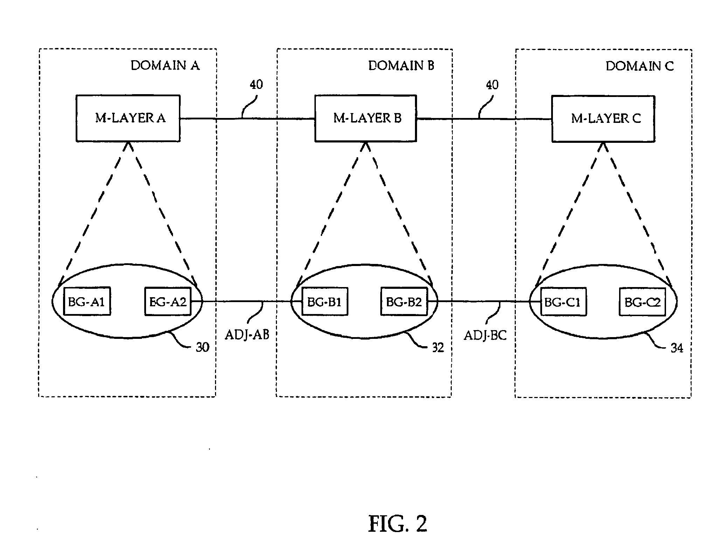

Referring to FIG. 2, an example multi-domain network is shown. The multi-domain network includes a first domain A, a second domain B, and a third domain C. Each of these domains is similar in accept to the example domain described above with reference to FIG. 1, each domain having a plurality of internal network elements (not shown in FIG. 2), border gateways, and a management layer. The first domain A has a set of network elements 30, including a first border gateway BG-A1 and second border gateway BG-A2, and a management layer M-A. The second domain B has a set of network elements 32, including a first border gateway BG-B1 and second border gateway BG-B2, and a management layer MB. The third domain C has a set of network elements 34, including a first border gateway BG-C1 and second border gateway BG-C2, and a management layer M-C. The domains A, B, and C are distinct in at least one of technology employed and administration. For example, domain A may be an ATM-based network offering Ethernet transport services over ATM circuits, domain B may be a SONET-based network offering Ethernet transport services using SONET frame encapsulation, and domain C may be a SONET-based network offering the same type of Ethernet transport services but under a different administrative control than that of domain B, and perhaps implemented using equipment from a different vendor as that of domain B.

The management layers in each of the domains communicate with each other over management layer communication channels 40. The management layer communication channels may be in-path or out-of-path.

An adjacency ADJ-AB exists between the second border gateway BG-A2 of the first domain A and the first border gateway BG-B1 of the second domain B. An adjacency ADJ-BC exists between the second border gateway BG-B2 of the second domain B and the first border gateway BG-C1 of the third domain C. Each adjacency is defined as the physical connection between the respective border gateways, a set of services supported across the physical connection, and policies associated with each of the services within the set of supported services. The physical connection may be of any type, such as an Ethernet link connection. The policies form part of an adjacency service contract, which is established by the operators when establishing the physical connection. Examples of information that may be included within the policies are allowed service profiles, bandwidth allocation policies, label allocation policies, resource allocation policies, and actions to be taken when competition for resources occurs.

The multi-domain network described with reference to FIG. 2 is for example purposes only. More generally, there are a plurality of domains, each distinct in its combination of administration, network service, and implementation technology, within the multi-domain network. Each domain has a management layer which communicates with the management layer of the other domains via management layer communication channels. Each domain has border gateways, and adjacencies exist between border gateways of neighbouring domains.

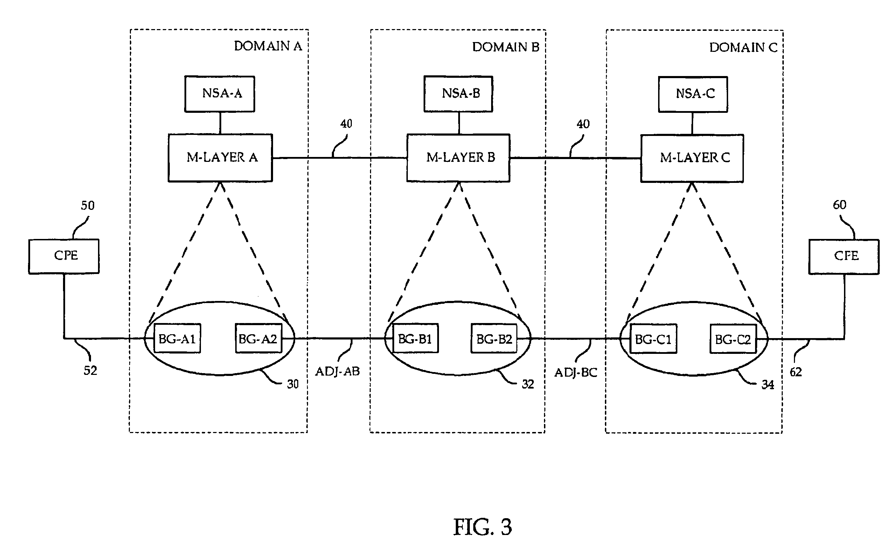

Referring to FIG. 3, an example point-to-point service is shown across the multi-domain network described with reference to FIG. 2. A first end user 50 communicates with the first border gateway BG-A1 of the first domain A through a first Service Access Point (SAP) 52. A second end user 60 communicates with the second border gateway BG-C2 of the third domain C through a second SAP 62. The service is carried over an end-to-end link (which may be connection-oriented or connectionless) from the first end user 50, through the first SAP 52, through the network elements 30 of the first domain A, over the adjacency ADJ-AB between the first domain A and the second domain B, through the network elements 32 of the second domain B, over the adjacency ADJ-BC between the second domain B and the third domain C, through the network elements 34 of the third domain C, and through the second SAP 62 to the second end user 60.

Each SDM contains decision logic and a protocol engine that builds service domain reachability by producing and consuming advertisements of the capabilities of a domain to reach other domains using service segments of a particular type, thereby enabling cross-domain service routing. For scalability reasons, the SDMs only provide domain service reachability information, that is, information indicating whether an end-point can be reached using a particular service through a given domain as opposed to end-point address reachability. The SDMs are also truly open as a policy-based decision process, and provide extensibility in the use and diffusion of third party metrics, another difference with respect to BGP.

For each service supported by an SDM in a domain, the SDM advertises the service over adjacencies through which it can support the service. Therefore neighbouring domains (or more precisely, the SDMs of the neighbouring domains) are made aware that the service is supported by the domain. The advertisements are transitive, in that a domain which receives an advertisement passes that advertisement on to its own neighbouring domains (unless an administrative policy within the domain forbids passing on of the advertisement). For example, if service S is one of the services that can be supported by adjacency ADJ-AB of Fig. 2, the SDM of domain A advertises across adjacency ADJ-AB that it can offer service S. The SDM of domain B forwards the advertisement across adjacency ADJ-BC to domain C. The SDMs do not advertise the technology of the originating domain, but only the service offered by the domain.

The SDMs advertise only domain reachability, and not end-point reachability. Reachability of individual users may be handled by a separate, federated naming service. This arrangement avoids the routing table explosion that is a well known BGP problem and permits the separation of user access policies from the policies for inter-domain routing. The latter enables operators to change their user access policies without requiring route re-computation. This separation also avoids dependencies between routing policies and the aggregation of end-point addresses into prefixes. Each domain is therefore concerned with two fully separate tasks: identifying the domain that hosts an end-point, through use of a separate generalized naming service; and finding a path of domains that can reach the domain that hosts the end-point using a specified service.

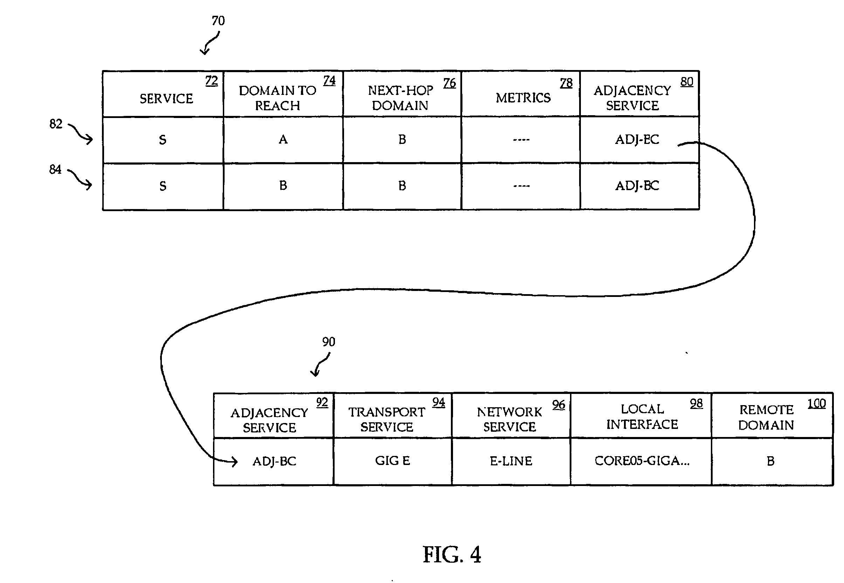

As each domain receives an advertisement, the SDM of the domain updates a routing information table to include an identification of the domain that originated the advertisement, an identification of the service, the domain from which the advertisement was directly received, and zero or more metrics that may be useful to a Routing Service process in selecting a route. The routing information table may also include an identification of the service and the adjacency service over which the advertisement was received, although alternatively a separate routing information table may be maintained for each service and the adjacency service leading to the domain from which the advertisement was received may be stored in a separate set of tables. In this way, the SDM of each domain builds a routing information table having entries correlating, at least, services, end point domains for the service, next hops to reach the domains offering the services, identifications of border gateways within the domain to which services are to be routed internally, and optionally metrics. The routing information table does not identify end points, so as to prevent the very large routing tables that can occur with more traditional route discovery protocols such as BGP. The granularity of the routing information table is therefore at the domain level, and not at the end point level. Once all advertisement exchanges have occurred, the NMS of each domain has a full view of the end-to-end connectivity that is possible for a particular service, by means of the routing information table maintained by the respective SDM. Referring to FIG. 4, an example routing information table maintained by Domain C of FIG. 3 is shown. The routing information table 70 includes a service field 72 identifying the service (unless a separate routing information table is maintained for each service), a domain to reach field 74 identifying a domain of interest, a next-hop domain field 76 identifying a domain which provides the next hop towards the domain of interest, an optional metrics field 78 which may include one or more metrics, and an adjacency service field 80 which identifies the adjacency service through which the next-hop domain is reached (although the adjacency services and the next-hop domains may alternatively be associated using a separate table). When the SDM of domain C (or of any domain) receives an advertisement, it adds an entry to the routing information table 70 (unless the advertisement is a redundant advertisement) and populates the domain to reach field 74 with an identification of the domain that originated the advertisement and populates the next-hop domain field 76 with an identification of the neighbouring domain from which the advertisement was received. In the example routing information table 70, a first entry 82 indicates that the service S is supported by the domain A, which can be reached through domain B over adjacency service ADJ-BC. A second entry 84 indicates that the service S is supported by the domain B, which can be reached through domain B over adjacency ADJ-BC.

An example adjacency service table 90 is also shown in FIG. 4. The adjacency service table 90 may be linked to through the adjacency service field 80 of the routing information table 70, or may be accessed separately. The adjacency service table 90 is populated when the adjacency services are established by the operator of the domain. The adjacency service table 90 includes an adjacency service field 92 identifying the adjacency service, a transport service field 94 identifying the type of transport service, a network service field 96 identifying the type of service, a local interface field 98 identifying the physical interface through which the adjacency service is linked to the domain, and a remote domain field 100 identifying the neighbouring domain to which the adjacency service provides access.

Using an inter-domain protocol, peer domains therefore advertise support for new services within their domain to other domains. If a peer domain which receives this advertisement also supports this service, a peering session is established between the domains. Separate peering sessions are created for each service supported by the domains. Services are thereby treated independently from each other. The peering sessions run over management adjacency channels created at the boundaries between the peer domains as part of the collaboration agreement between the domains. Adjacency channels may be in-path or out-of-path, a key difference with BGP since BGP only allows inter-domain in-path peering sessions. Therefore, the liveness of the peer session of the present invention can be separated from the liveness of the border gateways that provide the cross-domain service transport. This separation provides for added flexibility to adapt to different management requirements and modes of operation, at each adjacency point in an overall end-to-end path. For instance, the normal termination of a peering session may be mutually agreed to signify correct operation and validity of advertisements as long as the transport adjacency operates normally, or until a new peer session is established that may modify the existing advertisements.

When service domain reachability information is received from a peer domain, the service domain reachability information is propagated onto other peer domains which support the service. Metrics may be attached to advertisements to qualify service routes, thereby allowing each domain management system to determine the best route to any destination domain using the criteria particular to the domain management system. Each domain may use metrics or operational policies that are not propagated through the advertisements but that have local significance and may be provided by other applications or third parties. The service routing information can be dynamically updated throughout the multi-domain network, based on availability of those services and/or the resources to carry out those services within each domain. Each domain management system retains control over its own domain.

The mechanism for exchanging reachability information may be implemented in an architecture for managing cross-domain services, such as that taught by Canadian Patent Application 2,467,939, entitled "Architecture for Configuration and Management of Cross-Domain Network Services", filed on May 20, 2004 and assigned to the same assignee as that of the present invention.

The embodiments presented are exemplary only and persons skilled in the art would appreciate that variations to the embodiments described above may be made without departing from the invention. The scope of the invention is solely defined by the appended claims.

## Claims

1. A method of distributing service domain reachability information across domain boundaries in a communication network, the domains (A, B, C) differing in at least one of administrator, technology, and vendor, **characterized in that** it comprises:
transmitting an advertisement identifying a service (S) supported within a domain (A, B, C) to at least one peer domain (A, B, C);
monitoring for receipt of advertisements from peer domains (A, B, C); and
upon receipt of an advertisement from a peer domain (A, B, C):
adding to a routing information table (70) an identification (72) of the service (S), an identification (74) of an originating domain of the advertisement, and an identification (76) of the peer domain; and
propagating the advertisement to other peer domains (A, B, C).

2. The method of claim 1 further comprising, upon receipt of an advertisement, adding to the routing information table (70) at least one metric (78) to be associated with the service (S), with the originating domain, and with the peer domain (A, B, C).

3. The method of claim 1 wherein transmitting an advertisement comprises transmitting the advertisement over an out-of-path channel.

4. A network element within a first domain (A, B, C) of a network, the network including at least one other domain (A, B, C) differing from the first domain in at least one of administrator, technology, and vendor, at least one of the other domain being a peer domain of the first domain, **characterized in that** the network element comprises:
a routing information table (70); and
a service domain manager (20), comprising:
means for transmitting to at least one peer domain (A, B, C) an advertisement identifying a service (S) supported within the first domain and identifying the first domain;
means for monitoring for receipt of received advertisements from the at least one peer domain (A, B, C);
means for, upon receipt of a received advertisement, adding to the routing information table (70) an identification (72) of the service (S) specified by the received advertisement, an identification (74) of an originating domain specified by the received advertisement, and an identification (76) of the peer domain from which the received advertisement was received; and
means for, upon receipt of a received advertisement, propagating the received advertisement to other peer domains (A, B, C).

5. The network element of claim 4 further comprising:
means for, upon receipt of a received advertisement, computing at least one new metric value (78) associated with the service (S) specified by the received advertisement, the originating domain specified by the received advertisement, and the peer domain specified by the received advertisement; and
means for associating within the routing information table (70) the at least one metric value (78).

6. The network element of claim 5 wherein the means for propagating the received advertisement comprise means for propagating the at least one metric value (78) along with the advertisement.

7. The network element of claim 4 wherein the means for transmitting an advertisement comprise transmitting the advertisement over an out-of-path channel.

8. A computer-readable medium storing instructions for use in a network element within a first domain (A, B, C) of a network, the network including at least one other domain (A, B, C) differing from the first domain in at least one of administrator, technology, and vendor, at least one of the other domain being a peer domain of the first domain, **characterized in that** the instructions comprises:
instructions for maintaining a routing information table (70);
instructions for transmitting to at least one peer domain (A, B, C) an advertisement identifying a service (S) supported within the first domain and identifying the first domain;
instructions for monitoring for receipt of received advertisements from the at least one peer domain (A, B, C);
instructions for, upon receipt of a received advertisement, adding to the routing information table (70) an identification (72) of the service (S) specified by the received advertisement, an identification (74) of an originating domain specified by the received advertisement, and an identification (76) of the peer domain from which the received advertisement was received; and
instructions for, upon receipt of a received advertisement, propagating the received advertisement to other peer domains (A, B, C).

## Patentansprüche

1. Ein Verfahren zum Verteilen von Domainerreichbarkeitsinformation über die Domaingrenzen hinaus in einem Kommunikationsnetzwerk, wobei sich die Domains (A, B, C) mindestens durch entweder den Administrator, die Technologie oder den Anbieter unterscheiden, **dadurch gekennzeichnet, dass** es umfasst:
Übertragen einer Anzeige, welche einen Dienst (S) identifiziert, der innerhalb der Domain (A, B, C) unterstützt wird, an mindestens eine Peer-Domain (A, B, C);
Überwachen des Empfangs von Anzeigen von Peer-Domains (A, B, C); und
nach Empfang einer Anzeige von einer Peer-Domain (A, B, C):
Hinzufügen einer Kennung (72) des Dienstes (S), einer Kennung (74) einer Ursprungsdomain der Anzeige und einer Kennung (76) der Peer-Domain zu einer Routing-Informationstabelle (70); und
Verbreiten der Anzeige an andere Peer-Domains (A, B, C).

2. Das Verfahren nach Anspruch 1, weiterhin umfassend, nach Empfang einer Anzeige, das Hinzufügen von mindestens einer Metrik (78), welche mit dem Dienst (S), mit der Ursprungsdomain und mit der Peer-Domain (A, B, C) zu assoziieren ist, zu der Routing-Informationstabelle (70).

3. Das Verfahren nach Anspruch 1, wobei das Übertragen einer Anzeige das Übertragen der Anzeige über einen Out-of-Path-Kanal umfasst.

4. Ein Netzwerkelement innerhalb einer ersten Domain (A, B, C) eines Netzwerks, wobei das Netzwerk mindestens eine weitere Domain (A, B, C) umfasst, welche sich von der ersten Domain durch mindestens entweder den Administrator, die Technologie oder den Anbieter unterscheidet, wobei mindestens eine der weiteren Domains eine Peer-Domain der ersten Domain ist, **dadurch gekennzeichnet, dass** das Netzwerkelement umfasst:
Eine Routing-Informationstabelle (70); und
einen Service Domain Manager (20), umfassend:
Mittel zum Übertragen einer Anzeige, welche einen Dienst (S), der innerhalb der ersten Domain (A, B, C) unterstützt wird, und die erste Domain identifiziert, an mindestens eine Peer-Domain (A, B, C);
Mittel zum Überwachen des Empfangs von von der mindestens einen Peer-Domain (A, B, C) empfangenen Anzeigen; und
Mittel zum Hinzufügen, nach Empfang einer empfangenen Anzeige, einer Kennung (72) des in der empfangenen Anzeige spezifizierten Dienstes (S), einer Kennung (74) einer in der empfangenen Anzeige spezifizierten Ursprungsdomain der Anzeige, und einer Kennung (76) der Peer-Domain, von welcher die empfangene Anzeige empfangen wurde, zu einer Routing-Informationstabelle (70); und
Mittel zum Verbreiten, nach Empfang einer empfangenen Anzeige, der empfangenen Anzeige an andere Peer-Domains (A, B, C).

5. Das Netzwerkelement nach Anspruch 4, weiterhin umfassend:
Mittel zum Berechnen, nach Empfang einer empfangenen Anzeige, von mindestens einem neuen Metrikwert (78), welcher mit dem in der empfangenen Anzeige spezifizierten Dienst (S), der in der empfangenen Anzeige spezifizierten Ursprungsdomain und der in der empfangenen Anzeige spezifizierten Peer-Domain assoziiert ist; und
Mittel zum Assoziieren des mindestens einen Metrikwerts (78) innerhalb der Routing-Informationstabelle (78).

6. Das Netzwerkelement nach Anspruch 5, wobei die Mittel zum Verbreiten der empfangenen Anzeige Mittel zum Verbreiten des mindestens einen Metrikwerts zusammen mit der Anzeige umfasst.

7. Das Verfahren nach Anspruch 4, wobei die Mittel zum Übertragen einer Anzeige das Übertragen der Anzeige über einen Out-of-Path-Kanal umfassen.

8. Ein computerlesbares Medium zum Speichern von Befehlen zur Benutzung in einem Netzwerkelement innerhalb einer ersten Domain (A, B, C) eines Netzwerks, wobei das Netzwerk mindestens eine weitere Domain (A, B, C) umfasst, welche sich von der ersten Domain durch mindestens entweder den Administrator, die Technologie oder den Anbieter unterscheidet, wobei mindestens eine der weiteren Domains eine Peer-Domain der ersten Domain ist, **dadurch gekennzeichnet, dass** die Befehle umfassen:
Befehle zum Verwaltung einer Routing-Informationstabelle (70);
Befehle zum Übertragen einer Anzeige, welche einen Dienst (S), der innerhalb der ersten Domain (A, B, C) unterstützt wird, und die erste Domain identifiziert, an mindestens eine Peer-Domain (A, B, C);
Befehle zum Überwachen des Empfangs von von der mindestens einen Peer-Domain (A, B, C) empfangenen Anzeigen; und
Befehle zum Hinzufügen, nach Empfang einer empfangenen Anzeige, einer Kennung (72) des in der empfangenen Anzeige spezifizierten Dienstes (S), einer Kennung (74) einer in der empfangenen Anzeige spezifizierten Ursprungsdomain und einer Kennung (76) der Peer-Domain, von welcher die empfangene Anzeige empfangen wurde, zu der Routing-Informationstabelle (70); und
Befehle zum Verbreiten, nach Empfang einer empfangenen Anzeige, der empfangenen Anzeige an andere Peer-Domains (A, B, C).

## Revendications

1. Procédé de distribution d'une information d'accessibilité d'un domaine de service entre des limites de domaine dans un réseau de communication, les domaines (A, B, C) étant différents au moins du point de vue de l'administrateur, de la technologie et du fournisseur, **caractérisé en ce qu'**il comprend :
Émission d'un spot publicitaire identifiant un service (S) pris en charge au sein d'un domaine (A, B, C) vers au moins un domaine homologue (A, B, C) ;
Surveillance de la réception des spots publicitaires de la part des domaines homologues (A, B, C) ; et
sur réception d'un spot publicitaire de la part d'un domaine homologue (A, B, C) :
Ajout à une table d'information de routage (70) d'une identification (72) du service (S), d'une identification (74) d'un domaine originel du spot publicitaire et d'une identification (76) du domaine homologue ; et
Propagation du spot publicitaire à d'autres domaines homologues (A, B, C).

2. Procédé selon la revendication 1, comprenant en plus, sur réception d'un spot publicitaire, l'ajout à la table d'information de routage (70) d'au moins un indice (78) à associer au service (S), au domaine originel et au domaine homologue (A, B, C).

3. Procédé selon la revendication 1, l'émission d'un spot publicitaire comprenant l'émission du spot publicitaire sur un canal hors trajet.

4. Élément de réseau au sein d'un premier domaine (A, B, C) d'un réseau, le réseau comprenant au moins un autre domaine (A, B, C) qui est différent du premier domaine au moins du point de vue de l'administrateur, de la technologie et du fournisseur, au moins l'un des autres domaines étant un domaine homologue du premier domaine, **caractérisé en ce que** l'élément de réseau comprend :
une table d'information de routage (70) ;
un gestionnaire de domaine de service (20) comprenant :
des moyens pour émettre vers au moins un domaine homologue (A, B, C) un spot publicitaire identifiant un service (S) pris en charge au sein du premier domaine (A, B, C) et identifiant le premier domaine ;
des moyens pour surveiller la réception des spots publicitaires de la part de l'au moins un domaine homologue (A, B, C) ;
des moyens pour, sur réception d'un spot publicitaire, ajouter à la table d'information de routage (70) une identification (72) du service (S) spécifié par le spot publicitaire reçu, une identification (74) d'un domaine originel du spot publicitaire spécifié par le spot publicitaire reçu et une identification (76) du domaine homologue de la part duquel le spot publicitaire a été reçu ; et
des moyens pour, sur réception d'un spot publicitaire reçu, propager le spot publicitaire reçu aux autres domaines homologues (A, B, C).

5. Élément de réseau selon la revendication 4, comprenant :
des moyens pour, sur réception d'un spot publicitaire, calculer au moins une nouvelle valeur d'indice (78) associée au service (S) spécifié par le spot publicitaire reçu, le domaine originel spécifié par le spot publicitaire reçu et le domaine homologue spécifié par le spot publicitaire reçu ; et
des moyens pour associer l'au moins une valeur d'indice (78) au sein de la table d'information de routage (70).

6. Élément de réseau selon la revendication 5, les moyens de propagation du spot publicitaire reçu comprenant des moyens pour propager l'au moins une valeur d'indice (78) conjointement avec le spot publicitaire.

7. Élément de réseau selon la revendication 4, les moyens d'émission d'un spot publicitaire comprenant l'émission du spot publicitaire sur un canal hors trajet.

8. Support lisible par un ordinateur stockant des instructions destinées à être utilisées dans un élément de réseau au sein d'un premier domaine (A, B, C) d'un réseau, le réseau comprenant au moins un autre domaine (A, B, C) qui est différent du premier domaine au moins du point de vue de l'administrateur, de la technologie et du fournisseur, au moins l'un des autres domaines étant un domaine homologue du premier domaine, **caractérisé en ce que** les instructions comprennent :
des instructions pour maintenir une table d'information de routage (70) ; des instructions pour émettre vers au moins un domaine homologue (A, B, C) un spot publicitaire identifiant un service (S) pris en charge au sein du premier domaine et identifiant le premier domaine ;
des instructions pour surveiller la réception des spots publicitaires de la part de l'au moins un domaine homologue (A, B, C) ;
des instructions pour, sur réception d'un spot publicitaire, ajouter à la table d'information de routage (70) une identification (72) du service (S) spécifié par le spot publicitaire reçu, une identification (74) d'un domaine originel du spot publicitaire spécifié par le spot publicitaire reçu et une identification (76) du domaine homologue de la part duquel le spot publicitaire a été reçu ; et
des instructions pour, sur réception d'un spot publicitaire reçu, propager le spot publicitaire reçu aux autres domaines homologues (A, B, C).
